# DEMANDE DE BREVET EUROPEEN

(11) **EP 0 861 739 A1**
(43) Date de publication de la demande: **02.09.1998**
(21) Numéro de dépôt: 98400130.5
(22) Date de dépôt: 22.01.1998
(51) Int. Cl.: B60C 7/08, B60C 7/10

(54) **Garniture pour pneumatique du type increvable et procédé de montage de cette garniture**

(30) Priorité: 27.02.1997 FR 9702335
(71) Demandeur: HUTCHINSON, F-75008 Paris (FR)
(72) Inventeur: Lelievre, Alain, 60530 Fresnoy En Thelle (FR); Seradarian, Pascal, Lawrenceville, NJ 08648 (US); Ammour, Brahim, 60110 Meru (FR)
(74) Mandataire: Ramey, Daniel

(57) **Abrégé**

Garniture pour pneumatique de type increvable, réalisée en deux parties (10) juxtaposées le long d'un plan équatorial de la garniture et fendues en au moins un point de leur périphérie pour présenter des faces d'extrémités (26) en oblique, facilitant le montage de la garniture à l'intérieur du pneumatique (12).

L'invention s'applique aux garnitures de pneumatiques de type increvable pour engins de transport ou de manutention de charges et engins de travaux public.

## Description

L'invention concerne des garnitures pour pneumatiques du type increvable, en particulier destinés à des engins de transport et/ou de manutention de charges, des engins de travaux publics, des engins à usage militaire, etc., et concerne également des procédés de montage de ces garnitures à l'intérieur des pneumatiques.

De façon connue et comme décrit notamment dans les demandes de brevet français 94 12804 et 95 12083 de la demanderesse, une garniture de ce type est formée d'un élément torique en caoutchouc ou en élastomère qui remplit tout l'espace disponible à l'intérieur d'un pneumatique monté sur une jante de roue et qui est réalisé en deux parties identiques juxtaposées de part et d'autre d'un plan équatorial de la garniture, chaque partie ou moitié de garniture comprenant des canaux circonférenciels parallèles remplis d'air et séparés les uns des autres pour conférer une élasticité et une compressibilité voulues à la garniture tout en conservant à celle-ci une certaine rigidité en périphérie pour assurer une durée de vie suffisante, pour permettre une transmission de couple élevé et pour que le pneumatique ainsi équipé ait un comportement identique à celui d'un pneumatique classique gonflé à une pression qui est de quelques bars pour un petit engin du type chargeur par exemple, et qui peut atteindre une dizaine de bars dans le cas d'un engin plus gros de transport et/ou de manutention de charges.

Ces garnitures sont en outre légèrement comprimées à l'intérieur des pneumatiques, pour augmenter leur durée de vie et améliorer leur comportement sous charge.

Toutes ces caractéristiques imposent l'utilisation d'un outillage ou d'une machine spécifique pour monter les garnitures dans les pneumatiques. Cela constitue un inconvénient important pour les utilisateurs de ces pneumatiques, d'autant plus que les garnitures ont une durée de vie en principe plusieurs fois supérieure à celle des pneumatiques et que les utilisateurs doivent donc pouvoir démonter les garnitures des pneumatiques usés ou détruits et les remonter dans des pneumatiques neufs, ce qui les oblige à s'équiper desdits outillages ou machines spécifiques ou à apporter leurs pneumatiques à un atelier équipé de ces outillages ou machines.

La présente invention a notamment pour but d'éviter cet inconvénient.

Elle a pour objet une garniture du type précité, qui puisse être montée à l'intérieur d'un pneumatique sans outillage ni machine spécifique.

Elle a également pour objet un procédé de montage d'une telle garniture à l'intérieur d'un pneumatique, qui puisse être exécuté facilement à la main ou par l'intermédiaire de moyens d'usage courant qui sont partout disponibles.

Elle propose à cet effet, une garniture pour pneumatique du type increvable, en particulier pour des engins de transport et/ou de manutention de charges et des engins de travaux publics, cette garniture étant de forme torique et destinée à occuper tout l'espace disponible à l'intérieur du pneumatique monté sur une jante de roue, en étant réalisée en deux parties identiques en élastomère ou en caoutchouc juxtaposées de part et d'autre d'un plan équatorial par rapport à l'axe de la garniture, caractérisée en ce que, pour faciliter son montage à l'intérieur du pneumatique, chaque partie de la garniture est fendue ou coupée en au moins un point de sa périphérie et comporte deux faces d'extrémités obliques destinées à être appliquées l'une sur l'autre quand la garniture est en place à l'intérieur du pneumatique, lesdites faces d'extrémités étant sensiblement parallèles et inclinées d'au moins 15 par rapport à un plan axial.

Ainsi coupée en un point de sa périphérie, chaque partie de la garniture peut être beaucoup plus aisément montée dans un pneumatique, notamment en étant poussée à la main à l'intérieur du pneumatique.

Selon d'autres caractéristiques de l'invention, lesdites faces d'extrémités de chaque partie de la garniture comportent une partie sensiblement radiale, de faible étendue par rapport à l'épaisseur radiale de la garniture et formant un bec de verrouillage ou de blocage desdites faces d'extrémités en appui l'une sur l'autre.

Ce bec de verrouillage ou de blocage assure le maintien d'une partie de la garniture à l'intérieur du pneumatique jusqu'à ce que le pneumatique et sa garniture soient montés sur une jante de roue.

Dans un premier mode de réalisation de l'invention, chaque partie de la garniture comprend de plus des entailles radiales formées dans sa périphérie extérieure et s'étendant sur au moins la moitié de son épaisseur radiale.

Ces entailles permettent de déformer beaucoup plus facilement une partie de garniture à la main pour son introduction à l'intérieur d'un pneumatique.

Dans un autre mode de réalisation de l'invention, chaque partie de garniture est partagée en plusieurs morceaux destinés à être juxtaposés autour de l'axe de la garniture.

Ce mode de réalisation s'applique de préférence aux garnitures de grandes dimensions, qui sont trop lourdes et trop difficiles à manipuler à la main quand elles sont d'une seule pièce.

L'invention propose également un procédé de montage d'une garniture du type correspondant au premier mode de réalisation précité, caractérisé en ce qu'il consiste à introduire une première extrémité d'une partie de la garniture à l'intérieur du pneumatique, à introduire progressivement le reste de cette partie à l'intérieur du pneumatique, à mettre en place la seconde extrémité de cette partie de la garniture dans le pneumatique en la faisant glisser sur la première extrémité de la même partie, et à procéder de même pour la seconde partie de la garniture, les extrémités de cette seconde partie étant angulairement écartées de celles de la première partie à l'intérieur du pneumatique.

Pour faciliter le montage de la garniture à l'intérieur du pneumatique, on peut enrouler chaque partie de la garniture sur elle-même en spirale pour réduire son diamètre extérieur, et on peut enduire préalablement lesdites parties de la garniture d'une matière réduisant les frottements, telle par exemple qu'une graisse ou du savon noir.

L'invention propose également un procédé de montage d'une garniture du type conforme au second mode de réalisation décrit ci-dessus, caractérisé en ce qu'il consiste à mettre en place dans le pneumatique successivement les différents morceaux de la première partie de la garniture, dans un ordre défini pour terminer par la mise en place d'un morceau à face d'extrémité inclinée en oblique sur un plan axial, puis à mettre en place de la même façon les différents morceaux de la seconde partie de la garniture, en respectant un décalage angulaire entre les deux parties de garniture autour de l'axe de la garniture.

Chaque morceau d'une partie de garniture peut, après mise en place dans le pneumatique, être maintenue en position par une sangle enroulée sur le pneumatique et cette partie de garniture, jusqu'à mise en place du dernier morceau de ladite partie de garniture.

De façon générale, l'invention facilite considérablement le montage de ces garniture et permet aux utilisateurs de ces pneumatiques de monter eux-mêmes ces garnitures dans des pneumatiques sans utiliser de machines spéciales.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une demie-vue schématique en coupe axiale d'une roue équipée d'un pneumatique increvable à garniture selon l'invention ;
- la figure 2 est une vue schématique en coupe transversale de cette roue ;
- la figure 3 est une vue semblable à la figure 2, mais représente uniquement le pneumatique et la garniture ;
- les figures 4 et 5 représentent schématiquement une demie garniture enroulée en spirale sur elle-même ;
- la figure 6 représente schématiquement une demie garniture dans sa position de montage à l'intérieur d'un pneumatique sur une jante de roue ;
- les figures 7a - 7j représentent schématiquement différentes phases du montage d'une garniture dans un pneumatique ;
- les figures 8, 9 et 10 représentent diverses variantes de réalisation d'une garniture selon l'invention.

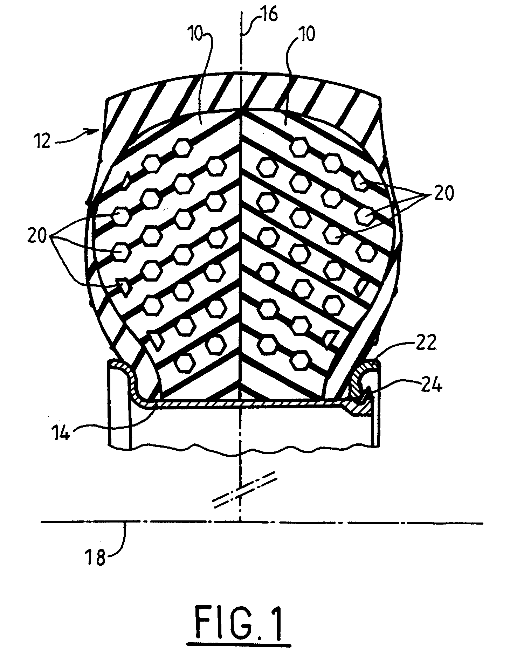

On se réfère d'abord à la figure 1, qui représente schématiquement en coupe une garniture du type déjà décrit dans les demandes de brevet français précitées de la demanderesse, cette garniture étant constituée de deux parties identiques 10 qui sont montées à l'intérieur d'un pneumatique 12 sur une jante 14 d'une roue, en remplissant tout l'espace disponible entre le pneumatique 12 et la jante 14, les deux parties 10 de la garniture étant réalisées en élastomère ou en caoutchouc et étant juxtaposées le long d'un plan équatorial 16 perpendiculaire à l'axe 18 de la garniture (cet axe étant également l'axe de rotation de la roue constituée par le pneumatique 12 et la jante 14).

Chaque partie 10 de la garniture comporte une pluralité de canaux circonférentiels 20 remplis d'air, qui sont séparés les uns des autres et qui sont à section hexagonale dans l'exemple de réalisation représenté en figure 1, ces canaux 20 permettant de conférer une élasticité et une compressibilité déterminées à la garniture, pour les raisons indiquées dans ce qui précède, la garniture étant par ailleurs légèrement comprimée à l'intérieur du pneumatique 12 monté sur la jante 14, pour augmenter sa durée de vie et améliorer son comportement en charge.

Comme on l'a également représenté en figure 1, la jante 14 est du type démontable et comporte des pièces annulaires amovibles 22, 24 de maintien et de blocage, dont le retrait permet le montage du pneumatique 12 et de sa garniture sur la jante 14 de la roue.

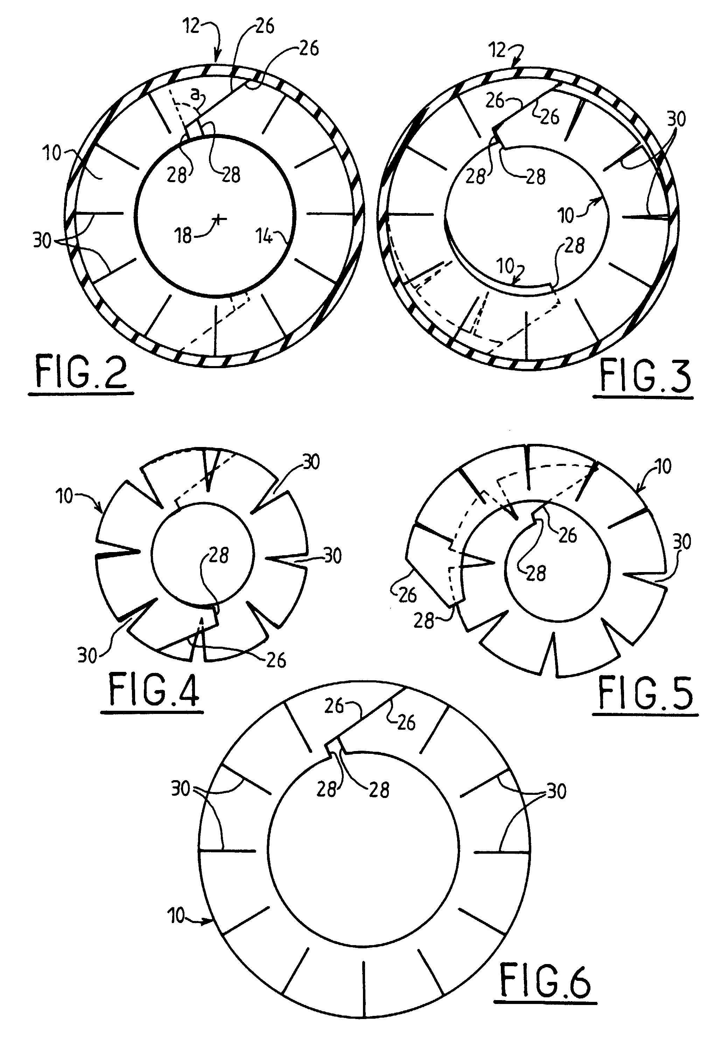

Pour faciliter le montage de la garniture à l'intérieur du pneumatique 12, l'invention prévoit, comme représenté schématiquement aux figures 2 à 6, que chaque partie 10 de la garniture soit coupée en un point de sa périphérie et présente deux extrémités libres dont les faces d'extrémités 26 sont sensiblement parallèles et inclinées en oblique par rapport à un plan radial passant par l'axe 18 de la garniture, l'angle a d'inclinaison des faces d'extrémités 26 par rapport à ce plan radial étant supérieur à 45° et étant légèrement inférieur à 90° dans l'exemple représenté.

Ces faces d'extrémités 26 qui sont destinées à être appliquées l'une sur l'autre quand cette partie 10 de la garniture est en place dans le pneumatique 12, comportent également chacune une partie radiale 28, de faible longueur par rapport à l'étendue radiale de la garniture, formée par exemple à la périphérie interne de la partie 10 et formant un bec de blocage ou de verrouillage des extrémités de cette partie 10 lors de son montage dans le pneumatique comme représenté schématiquement en figure 3.

Chaque partie 10 de la garniture comprend également des entailles radiales 30 formées dans sa surface périphérique extérieure et s'étendant à l'intérieur sur une certaine profondeur, au moins égale à la moitié de l'épaisseur radiale de la partie 10 de la garniture. Ces entailles radiales 30, qui sont régulièrement réparties sur la périphérie de la garniture et qui sont au nombre de 11 dans l'exemple représenté, permettent d'enrouler la partie 10 de la garniture sur elle-même en spirale pour réduire assez fortement son diamètre extérieur et faciliter ainsi son introduction dans le pneumatique 12 (celui-ci n'étant pas monté sur la jante 14). L'écart angulaire entre les entailles 30 est d'environ 30° dans l'exemple représenté, et pourrait varier de 20 à 45° environ.

Lorsque la partie 10 de la garniture est enroulée en spirale sur elle-même comme représenté en figure 4, les entailles 30 sont largement ouvertes, mais ont tendance à se refermer dès que l'on relâche la partie 10 de la garniture et que celle-ci commence à se dérouler comme représenté en figure 5.

En figure 3, les deux parties 10 de la garniture sont représentées dans les positions qu'elles occupent à l'intérieur du pneumatique 12 non monté sur une roue, et l'on voit que les parties radiales des faces d'extrémités de chaque partie 10 de la garniture sont en appui l'une sur l'autre et que les deux parties 10 de la garniture sont décalées angulairement de 180° environ l'une par rapport à l'autre.

En figure 6, une partie 10 de la garniture est représentée schématiquement dans la position qu'elle doit normalement occuper à l'intérieur du pneumatique monté sur une roue, et l'on voit que les parties radiales 28 de ces faces d'extrémités sont écartées l'une de l'autre tandis que les parties planes obliques 26 de ces faces d'extrémités sont en appui l'une sur l'autre, cette disposition correspondant à celle représentée en figure 2. En variante, les parties radiales 28 peuvent être appliquées l'une sur l'autre dans la position des figures 2 et 6.

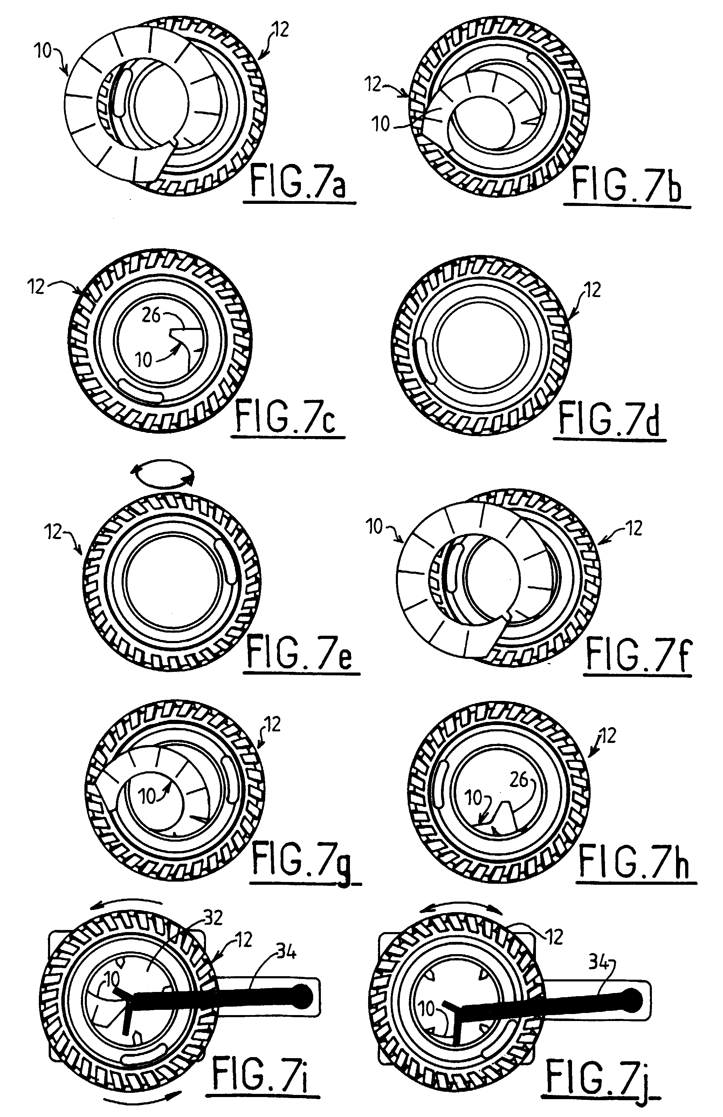

On se réfère maintenant aux figures 7a - 7j qui illustrent schématiquement le montage des deux parties 10 de la garniture à l'intérieur du pneumatique 12.

A la figure 7a, une première partie 10 de la garniture a été enroulée en spirale sur elle-même comme représenté schématiquement aux figures 4 et 5, et l'une de ses extrémités est introduite à l'intérieur du pneumatique 12. Ensuite, et comme représenté schématiquement en figure 7b, on pousse cette partie 10 de la garniture en la faisant glisser à l'intérieur du pneumatique, ce glissement étant facilité par une enduction préalable de graisse ou de savon noir sur la partie 10 de garniture.

Lorsque cette partie 10 se trouve à peu près entièrement à l'intérieur du pneumatique 12 comme représenté en figure 7c, il suffit de pousser l'extrémité de cette partie 10 qui se trouve encore partiellement à l'extérieur du pneumatique pour faire glisser sa face d'extrémité 26 sur l'autre face d'extrémité 26 déjà logée à l'intérieur du pneumatique et arriver dans l'état représenté en figure 7d, où une première partie 10 de garniture est entièrement logée dans le pneumatique 12 et se trouve dans la position représentée en figure 3.

Ensuite, comme indiqué schématiquement en figure 7e, on retourne le pneumatique 12 puis on amène l'autre partie 10 de la garniture enroulée en spirale sur elle-même, et l'on introduit l'une de ses extrémités dans le pneumatique 12 comme représenté schématiquement en figure 7f. En poussant sur cette seconde partie 10 de la garniture, on l'introduit petit à petit à l'intérieur du pneumatique 12 comme représenté schématiquement en figure 7g, après quoi on se retrouve en figure 7h dans la même situation qu'en figure 7c, où il reste à pousser l'extrémité libre de la garniture à l'intérieur du pneumatique en la faisant glisser sur la face d'extrémité déjà logée dans le pneumatique.

Cela peut être fait à la main comme les opérations précédentes, si la garniture n'est pas trop résistante, ou bien en utilisant une sangle que l'on enroule autour du pneumatique 12 et de l'extrémité en saillie de la partie de garniture et que l'on serre pour faire pénétrer cette extrémité dans le pneumatique, ou encore en utilisant une machine courante très simple du type représenté aux figures 7i et 7j, cette machine comprenant un support 32 sur lequel on peut placer le pneumatique pour le faire tourner autour de son axe, et un levier 34 dont une extrémité est montée pivotante à l'extérieur du pneumatique et dont une autre extrémité comporte une surface en V d'appui sur l'extrémité libre de la partie de garniture qui se trouve encore à l'extérieur du pneumatique, la rotation du support 32 obligeant, par l'intermédiaire du levier 34, cette extrémité de la partie de garniture à rentrer complètement à l'intérieur du pneumatique.

Lorsque les deux parties 10 de la garniture sont ainsi montées dans le pneumatique 12, elles sont dans la position représentée schématiquement en figure 3 et viennent ensuite occuper la position représentée schématiquement en figure 2 quand le pneumatique et la garniture sont montés sur la jante 14 d'une roue.

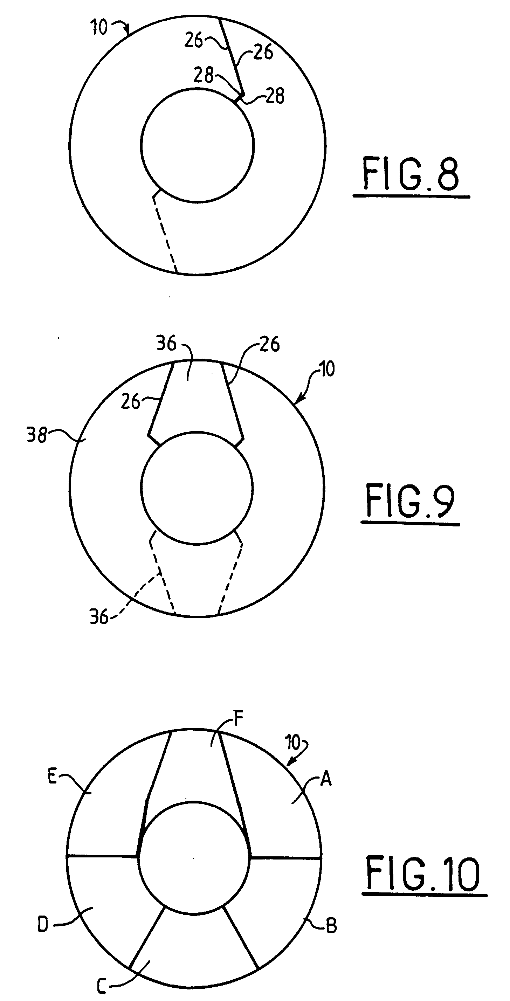

Des variantes de réalisation de l'invention sont représentées schématiquement aux figures 8, 9 et 10.

En figure 8, chaque partie 10 de la garniture comprend deux extrémités libres destinées à être appliquées l'une sur l'autre le long de faces d'extrémités 26, 28 identiques à celles déjà décrites dans ce qui précède, mais ces parties 10 sont dépourvues des entailles radiales 30 du mode de réalisation précédent.

Dans le mode de réalisation de la figure 9, chaque partie 10 de la garniture est elle-même réalisée en deux morceaux 36, 38, un morceau 36 s'étendant sur une faible étendue angulaire (par exemple de 30 à 45° environ) l'autre morceau 38 s'étendant sur une étendue angulaire plus importante, par exemple de 315 à 330° environ, les faces de contact des morceaux 36, 38 comprenant chacune une partie radiale 28 et une partie oblique 26 comme déjà décrit.

Pour le montage de cette garniture dans un pneumatique, on commence par disposer le morceau 38 d'une partie 10 de la garniture à l'intérieur du pneumatique, puis on met en place l'autre morceau 36 de cette partie 10, et on monte de la même façon l'autre partie 10 de la garniture à l'intérieur du pneumatique, de telle sorte que les morceaux 36 des deux parties de la garniture soient à peu près diamétralement opposés.

Enfin, comme représenté schématiquement en figure 10, chaque partie 10 de la garniture peut être divisée en plusieurs morceaux A, B, C, D, E et F respectivement, qui sont mis en place successivement et dans cet ordre à l'intérieur du pneumatique (ou dans un ordre différent à condition de terminer par le morceau F), chaque morceau mis en place pouvant être maintenu en position par une sangle serrée sur ce morceau et sur le pneumatique jusqu'à mise en place finale de tous les morceaux de la garniture dans le pneumatique.

Dans ce mode de réalisation, le morceau F de la garniture, que l'on place en dernier, présente à peu près les mêmes caractéristiques que les morceaux 36 du mode de réalisation de la figure 9.

Lorsque les parties 10 de garniture sont destinées à équiper des pneumatiques de grande dimension, leur poids peut être important et il est alors avantageux de les diviser en plusieurs morceaux comme représenté en figure 10 pour faciliter leur manipulation.

De façon générale, l'invention facilite la manipulation et le montage des garnitures pour pneumatiques increvables et supprime l'obligation d'utiliser pour ce montage des outillages ou machines spécifiques.

## Revendications

1. Garniture pour pneumatique du type increvable, en particulier pour des engins de transport ou de manutention de charges et des engins de travaux publics, cette garniture étant de forme torique et destinée à occuper tout l'espace disponible à l'intérieur d'un pneumatique (12) monté sur une jante de roue (14) et étant réalisée en deux parties (10) identiques en élastomère ou en caoutchouc juxtaposées de part et d'autre d'un plan équatorial (16) de la garniture, caractérisée en ce que, pour faciliter son montage à l'intérieur du pneumatique (12), chaque partie (10) de la garniture est fendue ou coupée en au moins un point de sa périphérie et comporte deux faces d'extrémités (26, 28) destinées à être appliquées l'une sur l'autre quand la garniture est en place à l'intérieur du pneumatique, lesdites faces d'extrémités étant sensiblement parallèles et inclinées d'au moins 15° par rapport à un plan passant par l'axe (18) de la garniture.

2. Garniture selon la revendication 1, caractérisée en ce que lesdites faces d'extrémités comportent une partie sensiblement radiale (28), de faible étendue par rapport à l'épaisseur radiale de la garniture et formant bec de verrouillage ou de blocage desdites faces d'extrémités en appui l'une sur l'autre.

3. Garniture selon la revendication 2, caractérisée en ce que ledit bec de verrouillage ou de blocage est formé à la périphérie intérieure des parties de garniture.

4. Garniture selon l'une des revendications précédentes, caractérisée en ce que chaque partie (10) de la garniture comprend des entailles radiales (30) formées dans sa périphérie extérieure et s'étendant sur au moins la moitié de son épaisseur radiale.

5. Garniture selon la revendication 4, caractérisée en ce que lesdites entailles (30) sont uniformément réparties sur la périphérie de chaque partie de garniture.

6. Garniture selon la revendication 5, caractérisée en ce que l'écart angulaire entre les entailles (30) est compris entre 20 et 45° environ.

7. Garniture selon l'une des revendications 1 à 3, caractérisée en ce que chaque partie (10) de garniture est partagée en plusieurs morceaux (36, 38; A, B, C, D, E, F) destinés à être juxtaposés autour de l'axe de la garniture.

8. Procédé de montage d'une garniture du type décrit dans l'une des revendications 1 à 6, caractérisé en ce qu'il consiste à introduire une première extrémité d'une partie (10) de la garniture à l'intérieur du pneumatique (12), puis à introduire progressivement le reste de cette partie à l'intérieur du pneumatique, à mettre en place la seconde extrémité de cette partie (10) dans le pneumatique, en la faisant glisser sur la première extrémité de cette partie, et à procéder de même pour la seconde partie de la garniture, les deux parties étant angulairement décalées l'une par rapport à l'autre à l'intérieur du pneumatique.

9. Procédé selon la revendication 8, caractérisé en ce que, pour faciliter l'introduction d'une partie (10) de la garniture dans le pneumatique, on enroule cette partie sur elle-même en spirale pour réduire son diamètre extérieur.

10. Procédé selon la revendication 8 ou 9, caractérisé en ce qu'on enduit lesdites parties (10) de la garniture d'une matière réduisant les frottements, telle par exemple qu'une graisse ou du savon noir avant de les introduire dans le pneumatique.

11. Procédé de montage d'une garniture du type décrit en revendication 7, caractérisé en ce qu'il consiste à mettre en place dans le pneumatique successivement les différents morceaux (36, 38; A - F) de la première partie de la garniture, dans un ordre défini pour terminer par la mise en place d'un morceau (36 ; F) à faces d'extrémités inclinées en oblique sur un plan passant par l'axe de la garniture, puis à mettre en place de la même façon les différents morceaux de la seconde partie de la garniture, en respectant un décalage angulaire prédéterminé entre les deux parties de garniture autour de l'axe de celle-ci.

12. Procédé selon la revendication 11, caractérisé en ce que chaque morceau d'une partie de garniture est, après mise en place dans le pneumatique, maintenu en position par une sangle enroulée sur le pneumatique et le morceau de garniture, jusqu'à mise en place du dernier morceau de la partie de garniture.
